# EUROPEAN PATENT APPLICATION

(11) **EP 4 787 288 A1**
(43) Date of publication of application: **05.08.2026**
(21) Application number: 24886164.3
(22) Date of filing: 28.10.2024
(51) Int. Cl.: G06T 3/10, G06F 40/279, G06V 20/40, G06F 3/04883, G06F 3/0484, G06T 11/60, G06Q 30/02, G06T 5/60

(54) **ELECTRONIC DEVICE FOR TRANSFORMING SUBJECT INCLUDED IN IMAGE, AND OPERATION METHOD THEREOF**

(30) Priority: 31.10.2023 KR 20230147664; 29.12.2023 KR 20230195972
(71) Applicant: Samsung Electronics Co., Ltd., Suwon-si, Gyeonggi-do 16677 (KR)
(72) Inventor: MOON, Chankyoo, Suwon-si, Gyeonggi-do 16677 (KR); KIM, Bosung, Suwon-si, Gyeonggi-do 16677 (KR); KIM, Jihyun, Suwon-si, Gyeonggi-do 16677 (KR); PARK, Sungkweon, Suwon-si, Gyeonggi-do 16677 (KR); LEE, Hyunseok, Suwon-si, Gyeonggi-do 16677 (KR)
(74) Representative: Nederlandsch Octrooibureau
(86) International application number: PCT/KR2024/016499
(87) International publication number: WO 2025/095490

(57) **Abstract**

An electronic device is provided. The electronic device may comprise: a display; a memory that stores instructions; and a processor. The instructions, when executed by the processor, may cause the electronic device to: identify an input for transforming a first subject included in a plurality of first images stored in the memory to be related to a specific scene or a specific operation of first content stored in the memory; in response to the input, acquire at least one image related to the specific scene or the specific operation from among a plurality of second images related to the first content; acquire a text command for transforming the first subject to be related to the specific scene or the specific operation; and acquire an image including a second subject obtained by transforming the first subject so as to be related to the specific scene or the specific operation by inputting the text command into a first artificial intelligence model stored in the memory. Other various embodiments are possible.

## Description

### [Technical Field]

Embodiments of the disclosure relate to an electronic device transforming a subject included in an image, and a method of operating the same.

### [Background Art]

With the remarkable advancement of information and communication technology and semiconductor technology, the distribution and use of various electronic devices are rapidly increasing. Electronic devices are being developed so that a user may carry them around and communicate. An electronic device may refer to a device performing various functions according to a mounted program, such as a mobile communication terminal, a tablet PC, a video/audio device, a desktop/laptop computer, or an in-vehicle navigation system.

Recently, users are interested in a function of editing an obtained image beyond simply capturing and obtaining an image using an electronic device. Accordingly, the electronic device is providing a function of editing an image.

However, when an image including another person is edited, an issue of infringement of portrait rights may occur. When a copyrighted work protected by another person's copyright is edited, an issue of copyright infringement may occur.

### [Detailed Description of the Invention]

### [Technical Solution]

According to an embodiment, an electronic device may include a display, memory, and a processor.

According to an embodiment, the electronic device may identify an input for transforming a first subject included in a plurality of first images stored in the memory to be related to a specific scene or a specific action of a first content stored in the memory.

According to an embodiment, in response to the input, the electronic device may obtain at least one image related to the specific scene or the specific action among a plurality of second images related to the first content.

According to an embodiment, the electronic device may obtain a text command for transforming the first subject to be related to the specific scene or the specific action.

According to an embodiment, the electronic device may obtain an image including a second subject in which the first subject is transformed to be related to the specific scene or the specific action by inputting the text command into a first artificial intelligence model stored in the memory.

According to an embodiment, a method of operating an electronic device may include an operation of identifying an input for transforming a first subject included in a plurality of first images stored in the memory of the electronic device to be related to a specific scene or a specific action of a first content stored in the memory.

According to an embodiment, the method of operating the electronic device may include an operation of obtaining at least one image related to the specific scene or the specific action among a plurality of second images related to the first content in response to the input.

According to an embodiment, the method of operating the electronic device may include an operation of obtaining text for transforming the first subject to be related to the specific scene or the specific action.

According to an embodiment, the method of operating the electronic device may include an operation of obtaining an image in which the first subject is transformed to be related to the specific scene or the specific action by inputting the text command into a first artificial intelligence model stored in the memory.

According to an embodiment, a non-transitory recording medium may store an instruction capable of executing an operation of identifying an input for transforming a first subject included in a plurality of first images stored in the memory of an electronic device to be related to a specific scene or a specific action of a first content stored in the memory.

According to an embodiment, the non-transitory recording medium may store an instruction capable of executing an operation of obtaining at least one image related to the specific scene or the specific action among a plurality of second images related to the first content in response to the input.

According to an embodiment, the non-transitory recording medium may store an instruction capable of executing an operation of obtaining text for transforming the first subject to be related to the specific scene or the specific action.

According to an embodiment, the non-transitory recording medium may store an instruction capable of executing an operation of obtaining an image including a second subject in which the first subject is transformed to be related to the specific scene or the specific action by inputting the text command into a first artificial intelligence model stored in the memory.

### [Brief Description of Drawings]

FIG. 1 is a view illustrating an electronic device in a network environment according to an embodiment.
FIG. 2 is a block diagram schematically illustrating an electronic device according to an embodiment.
FIG. 3 is a schematic block diagram illustrating an image generation module according to an embodiment.
FIG. 4 is a flowchart illustrating an operation of an electronic device obtaining a first artificial intelligence model according to an embodiment.
FIG. 5 is a flowchart illustrating an operation of an electronic device obtaining an image using a first artificial intelligence model according to an embodiment.
FIG. 6 is a flowchart illustrating an operation of an electronic device obtaining training data for a first artificial intelligence model based on a purchase history for content according to an embodiment.
FIG. 7 is a view illustrating an operation of an electronic device obtaining a first artificial intelligence model for transforming a subject to be related to content according to an embodiment.
FIG. 8 is a view illustrating an operation of an electronic device obtaining artificial intelligence models for transforming a subject to be related to content according to an embodiment.
FIG. 9 is a view illustrating an operation of an electronic device identifying an input for transforming a subject to be related to content according to an embodiment.
FIG. 10 is a view illustrating an operation of an electronic device obtaining a text command according to an embodiment.
FIG. 11 is a view illustrating an image obtained using a first artificial intelligence model by an electronic device according to an embodiment.

### [Mode for Carrying out the Invention]

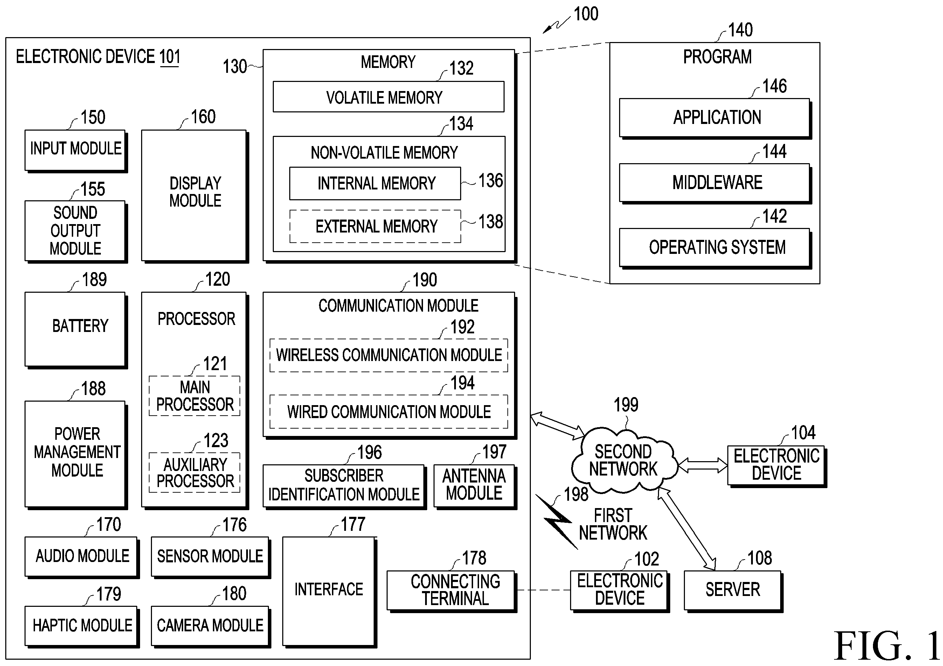

FIG. 1 is a block diagram illustrating an electronic device 101 in a network environment 100, according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing recordings. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

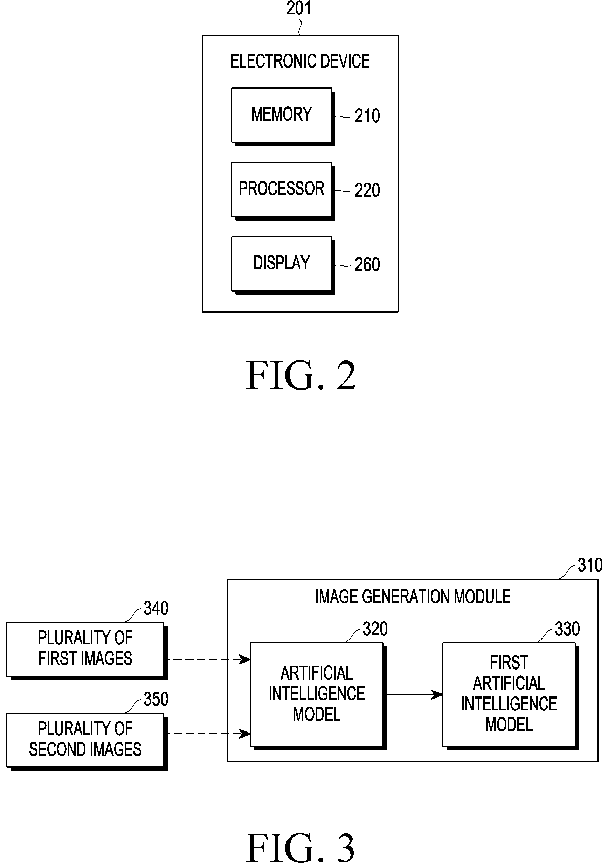

FIG. 2 is a block diagram schematically illustrating an electronic device according to an embodiment;

Referring to FIG. 2, according to an embodiment, an electronic device 201 (e.g., the electronic device 101 of FIG. 1) may include memory 210, a processor 220, and a display 260. According to an embodiment, the processor 220 may control the overall operation of the electronic device 201. According to an embodiment, the processor 220 may be implemented identically or similarly to the processor 120 of FIG. 1.

According to an embodiment, the electronic device 201 (or the processor 220) may generate an image in which an image stored in the memory 210 (e.g., an image in which a person is captured) is transformed to match a specific scene or a specific action of content stored in the memory 210 (e.g., a movie, an animation, a music video, a photo, or a picture). Further, the electronic device 201 (or the processor 220) may transform the image to match a concept or a painting style of the content stored in the memory 210. To this end, the electronic device 201 (or the processor 220) may use an artificial intelligence model (e.g., hereinafter, a first artificial intelligence model) for transforming or generating an image.

According to an embodiment, the processor 220 may obtain a first artificial intelligence model 330 (e.g., the first artificial intelligence model 330 of FIG. 3) by fine-tuning a pre-trained reference artificial intelligence model 320 (e.g., a baseline model or a foundation model) (e.g., the artificial intelligence model 320 of FIG. 3) stored in the memory 210 (e.g., the memory 130 of FIG. 1). According to an embodiment, training data for fine-tuning the first artificial intelligence model may include an image including a subject (e.g., a person, an animal, and/or an object) stored in the memory 210, and an image related to content stored in the memory 210 (e.g., at least one image included in the content).

According to an embodiment, the processor 220 may obtain a command (e.g., a text command or a text prompt) for transforming a subject included in an image to be related to a specific scene of content or a specific action of the content and obtaining a subject transformed from the subject included in the image. For example, the text command may represent a command in a text form recognizable by the first artificial intelligence model 330. For example, the text command may include a command for causing the first artificial intelligence model 330 to output an image including a transformed subject. According to an embodiment, the processor 220 may transform a subject included in an image to be related to a specific scene of content or a specific action of the content by inputting the text command into the first artificial intelligence model 330. According to an embodiment, the processor 220 may transform a subject into a subject performing the specific action, and may transform the subject by animating the subject.

According to an embodiment, the processor 220 may obtain a command (e.g., a text command or a text prompt) for transforming a subject included in an image stored in the memory 210 (e.g., an image in which a person is captured) to match a concept of content or a painting style of the content. For example, the concept of the content may include at least one of a composition, a background, or a color of a specific scene of the content. According to an embodiment, the processor 220 may generate an image including a new first scene or a first action not included in the first content based on a background, a color, a composition, or a painting style included in at least one scene related to the first content.

Accordingly, the electronic device 201 according to an embodiment may output an image that does not infringe the portrait rights of another person and does not infringe the copyright of another person's copyrighted work (e.g., content) using the first artificial intelligence model 330.

According to an embodiment, the processor 220 may obtain a plurality of images including a plurality of subjects stored in the memory 210. For example, the processor 220 may obtain at least a part of the plurality of images using a camera included in the electronic device 201. Alternatively, the processor 220 may receive or obtain at least a part of the plurality of images from an external electronic device through a communication circuit included in the electronic device 201. According to an embodiment, the plurality of subjects may include a person, an object, or an animal. According to an embodiment, the processor 220 may classify a plurality of images into images including an identical subject (e.g., a person) by using an image clustering technology. According to an embodiment, the processor 220 may associate names designated by a user input or the processor 220 (e.g., son, daughter, me, wife, our dog, dad, mom, etc.) with different subjects based on the user input.

According to an embodiment, the processor 220 may obtain at least one image related to content stored in the memory 210. According to an embodiment, the content may include a picture, a movie, a game, a comic, or a music video. According to an embodiment, the at least one image related to the content may include an image of a specific scene of the content, an image of a specific action (e.g., a specific action of a main character) provided by the content, or a representative image (e.g., a poster, a thumbnail) representing the content.

According to an embodiment, the processor 220 may obtain training data for training (e.g., fine-tuning) the artificial intelligence model 320 stored in the memory 210. According to an embodiment, the processor 220 may identify a user input for selecting training data among a plurality of images including a plurality of subjects, and a user input for selecting training data among a plurality of images related to content. According to an embodiment, depending on an implementation, the training data for training the artificial intelligence model 320 may be automatically selected by the processor 220.

According to an embodiment, the processor 220 may obtain the first artificial intelligence model 320 by training (or fine-tuning) the artificial intelligence model 320. The processor 220 may generate an image in which an image stored in the memory 210 (e.g., an image in which a person is captured) is transformed to match a specific scene or a specific action of content stored in the memory 210 (e.g., a movie, an animation, a music video, a photo, or a picture) based on a request from a user (e.g., a user input).

According to an embodiment, the processor 220 may fine-tune the artificial intelligence model 320 into the first artificial intelligence model 330 to generate an image in which an image of a specific subject (e.g., a specific person) is transformed to be related to a specific scene or a specific action of content.

Hereinafter, a method for the processor 220 to fine-tune the artificial intelligence model 320 into the first artificial intelligence model is described.

According to an embodiment, the processor 220 may identify a user input for selecting a specific subject (e.g., a person) among subjects (e.g., persons) classified for a plurality of images stored in the memory 210. For example, the processor 220 may classify a plurality of images based on names designated by a user or the processor 220 (e.g., son, daughter, me, wife, our dog, dad, mom, etc.). The processor 220 may display information (e.g., a list) on the classified names on the display 260. According to an embodiment, when a first subject (e.g., daughter) is selected by a user input, the processor 220 may obtain a plurality of first images including the first subject among a plurality of images including a plurality of subjects.

According to an embodiment, the processor 220 may identify a user input for selecting any one of a plurality of content stored in the memory 210 through the display 260. For example, the processor 220 may display identifiers (e.g., titles) of the plurality of content through the display 260 and identify a user input for selecting any one identifier (e.g., a title). The identifiers of the plurality of content may include a game title, a movie title, a title of a music video, and/or a comic title. According to an embodiment, when a first content is selected among the plurality of content, the processor 220 may obtain a plurality of second images related to the first content among a plurality of images related to the plurality of content. According to an embodiment, the plurality of second images may include a poster image of the first content, images representing specific scenes of the first content, and images representing specific actions of subjects of the first content.

According to an embodiment, the processor 220 may train (or fine-tune) the artificial intelligence model 320 by inputting the plurality of first images and the plurality of second images as training data into the artificial intelligence model 320. According to an embodiment, the processor 220 may obtain the first artificial intelligence model 330 (e.g., the first artificial intelligence model 330 of FIG. 3) as a result of training the artificial intelligence model 320. According to an embodiment, the first artificial intelligence model 330 may include an artificial intelligence model for transforming the first subject to be related to the first content.

According to an embodiment, the processor 220 may identify whether the first content is content legitimately purchased by the electronic device 201. For example, when the first content is identified as being obtained through an unverifiable path, the processor 220 may not use images of the first content as training data. For example, the processor 220 may not use images related to the first content as training data based on identifying that there is no purchase history for the first content. According to an embodiment, when the processor 220 identifies that a user of the electronic device 201 does not have a right to use the first content, the processor 220 may not use images of the first content as training data for the artificial intelligence model 320.

Hereinafter, an operation of the processor 220 transforming the first subject to be related to the first content using the first artificial intelligence model 330 after the first artificial intelligence model 330 is obtained is described.

According to an embodiment, the processor 220 may identify an input for transforming a first subject included in a plurality of first images stored in the memory 210 to be related to a specific scene or a specific action of the first content.

According to an embodiment, the processor 220 may obtain at least one image (or a plurality of images) including the first subject based on identifying the input, and may obtain at least one image (or a plurality of images) related to a specific scene or a specific action of the first content.

According to an embodiment, the processor 220 may identify whether there is a purchase history for the first content. According to an embodiment, when the processor 220 identifies that there is a purchase history for the first content, the processor 220 may obtain at least one image related to a specific scene or a specific action of the first content. According to an embodiment, when the processor 220 identifies that there is no purchase history for the first content, the processor 220 may not obtain at least one image related to a specific scene or a specific action of the first content. For example, when the first content is identified as being obtained through an unverifiable path, the processor 220 may not obtain at least one image related to a specific scene or a specific action of the first content.

According to an embodiment, the processor 220 may obtain a text command to be input into the first artificial intelligence model 330. According to an embodiment, the text command may include a name (e.g., daughter) classified corresponding to the first subject and an identifier (e.g., a title) of the first content. For example, the identifier of the first content may represent A. For example, the text command may include "transform daughter to be related to movie A using movie A."

According to an embodiment, the processor 220 may obtain a text command including the first subject and a specific scene or a specific action of the first content. For example, the text command may include "transform daughter to be related to the scene using a scene of a main character of movie A climbing an exterior wall of a building." According to an embodiment, the processor 220 may obtain a text command for generating an image including a first scene or a first action in which the first subject corresponding to a concept of the first content is included. For example, the concept of the first content may include at least one of a composition, a background, or a color of a specific scene of the first content. For example, the first scene or the first action may represent a new scene or a new action not included in the first content. For example, the text command may include "generate a scene of daughter climbing an exterior wall of a building based on a concept of movie A." For example, a scene in which a subject (e.g., a subject included in the first content (movie A)) climbs an exterior wall of a building may be a scene not included in movie A.

According to an embodiment, the processor 220 may obtain an image including a second subject in which the first subject is transformed to be related to a specific scene or a specific action by inputting the text command into the first artificial intelligence model 330.

According to an embodiment, the processor 220 may obtain an image including the transformed second subject using at least one of at least one subject, a composition, a background, or a color included in the at least one image related to the specific scene or the specific action of the first content.

For example, the image including the transformed second subject may be identical to at least one of a composition, a background, or a color of the at least one image related to the specific scene or the specific action of the first content.

According to an embodiment, the processor 220 may replace a subject included in the at least one image related to the specific scene or the specific action of the first content with the first subject.

According to an embodiment, when the first content is a picture, an animated movie, or a comic, the processor 220 may transform the first subject into a second subject having a painting style identical to a painting style of the first content. For example, the processor 220 may transform the first subject into a second subject animated to correspond to a painting style of the first content.

According to an embodiment, the processor 220 may transform the first subject into a second subject having body information of a subject included in the specific scene and wearing a costume identical to that of a subject included in the specific scene. For example, the body information may include at least one of muscle, height, face shape, eye shape, nose shape, ear shape, mouth shape, arm length, leg length, or torso length. According to an embodiment, the processor 220 may transform the first subject into a second subject having an expression identical to that of a subject included in the specific scene.

According to an embodiment, when a plurality of subjects are included in the specific scene, the processor 220 may transform the first subject into a second subject having body information of a subject corresponding to a main character and wearing a costume identical to that of a subject corresponding to the main character.

According to an embodiment, the processor 220 may generate an image including a first scene or a first action in which the first subject is included based on a concept of the first content by inputting a text command into the first artificial intelligence model 330. For example, the image including the first scene or the first action may be an image including a scene or an action not included in the first content. According to an embodiment, the processor 220 may generate a first scene or a first action in which the first subject is included based on a background, a color, a composition, or a painting style included in at least one scene related to the first content. For example, the processor 220 may generate an image including a first action of the first subject in a background included in at least one scene related to the first content. For example, the processor 220 may generate an image including a new first scene or a first action not included in the first content based on a background, a color, a composition, or a painting style included in at least one scene related to the first content.

FIG. 3 is a schematic block diagram illustrating an image generation module according to an embodiment.

Referring to FIG. 3, according to an embodiment, an image generation module 310 may be stored in the memory 210 (e.g., the memory 210 of FIG. 2). According to an embodiment, the image generation module 310 may be implemented as software. According to the implementation, at least a part of the image generation module 300 may be implemented as hardware.

According to an embodiment, the image generation module 310 may include an artificial intelligence model 320 and a first artificial intelligence model 330. According to an embodiment, the artificial intelligence model 320 may include a pre-trained reference artificial intelligence model (e.g., a baseline model or a foundation model). According to an embodiment, according to an embodiment, the processor 220 (e.g., the processor 220 of FIG. 2) may obtain the first artificial intelligence model 330 by fine-tuning the artificial intelligence model 320.

According to an embodiment, the processor 220 may obtain a plurality of first images 340 including the first subject. For example, the first subject may include a person, an animal, or an object.

According to an embodiment, the processor 220 may obtain a plurality of second images 350 related to the first content. According to an embodiment, the first content may include a game, a movie, a music video, a comic, or a picture. According to an embodiment, the plurality of second images 350 may include a poster image of the first content, images including specific scenes of the first content, and images including specific actions of subjects of the first content.

According to an embodiment, the processor 220 may obtain the first artificial intelligence model 330 for transforming the first subject to be related to a specific scene or a specific action of the first content by inputting the plurality of first images 340 and the plurality of second images 350 as training data into the artificial intelligence model 320.

According to an embodiment, the processor 220 may obtain the first artificial intelligence model 330 for generating an image including a first scene or a first action in which the first subject is included based on the first content by inputting the plurality of first images 340 and the plurality of second images 350 as training data into the artificial intelligence model 320. For example, the image including the first scene or the first action in which the first subject is included based on the first content may include an image based on at least one of a composition, a background, a color, or a painting style of at least one scene included in the first content. For example, the first scene or the first action may include a scene or an action not included in the first content. For example, the processor 220 may generate an image including a new first scene or a first action not included in the first content based on a background, a color, a composition, or a painting style included in at least one scene related to the first content.

According to an embodiment, the processor 220 may obtain a text command for transforming the first subject to be related to a specific scene or a specific action of the first content. For example, the text command may include text or a command for causing the first artificial intelligence model 330 to output an image including a second subject transformed from the first subject. According to an embodiment, the processor 220 may obtain an image in which the first subject is transformed to be related to a specific scene or a specific action of the first content by inputting the text command into the first artificial intelligence model 330.

According to an embodiment, the processor 220 may generate an image including a new first scene or a first action not included in the first content by inputting a text command into the first artificial intelligence model 330. In this case, the image including the new first scene or the first action not included in the first content may include an image based on at least one of a composition, a background, a color, or a painting style of at least one scene included in the first content.

According to an embodiment, the processor 220 may obtain a plurality of third images (not illustrated) related to second content different from the first content. According to an embodiment, the second content may include a game, a movie, a music video, a comic, or a picture. According to an embodiment, the plurality of third images may include a poster image of the second content, images including specific scenes of the second content, and images including specific actions of subjects of the second content.

According to an embodiment, the processor 220 may obtain a second artificial intelligence model (not illustrated) for transforming the first subject to be related to a specific scene or a specific action of the second content by inputting the plurality of first images 340 and the plurality of third images as training data into the artificial intelligence model 320.

According to an embodiment, the processor 220 may obtain a text command for transforming the first subject to be related to a specific scene or a specific action of the second content. For example, the text command may include text or a command for causing the second artificial intelligence model to output an image including a third subject transformed from the first subject. According to an embodiment, the processor 220 may generate an image including a new second scene or a second action not included in the second content by inputting a text command into the second artificial intelligence model. In this case, the image including the new second scene or the second action not included in the second content may include an image based on at least one of a composition, a background, a color, or a painting style of at least one scene included in the second content.

In FIG. 3, the plurality of first images 340 including the first subject are described as training data for the artificial intelligence model 320, but an image including a subject different from the first subject may be utilized as training data for the artificial intelligence model 320, and the same description as the plurality of first images 340 may be applied to the image including a subject different from the first subject.

In FIG. 3, the plurality of second images 350 related to the first content are described as training data for the artificial intelligence model 320, but images related to content different from the first content may be utilized as training data for the artificial intelligence model 320, and the same description as the plurality of second images 350 may be applied to images related to content different from the first content.

Operations of the electronic device 201 described in the drawings may be performed by the processor 220. However, for convenience of description, it is described that the operations performed by the processor 220 are performed by the electronic device 201.

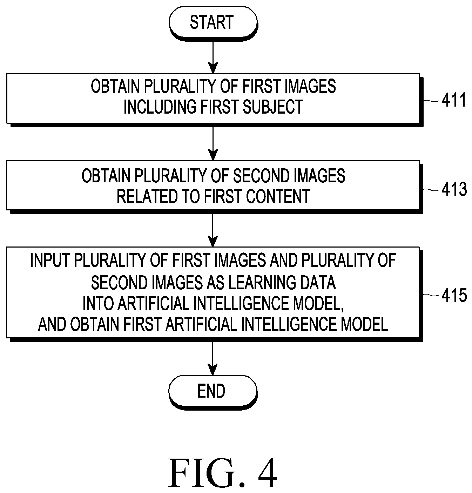

FIG. 4 is a flowchart illustrating an operation of an electronic device obtaining a first artificial intelligence model according to an embodiment.

Referring to FIG. 4, according to an embodiment, in operation 411, the electronic device 201 (e.g., the electronic device 201 of FIG. 2) may obtain a plurality of first images including a first subject among a plurality of images stored in the memory 210 (e.g., the memory 210 of FIG. 2). According to an embodiment, the first subject may include a person, an object, or an animal.

According to an embodiment, the electronic device 201 may classify a plurality of images by image including an identical subject using an image clustering technology. According to an embodiment, the electronic device 201 may associate names designated by a user or the processor 220 (e.g., son, daughter, me, wife, our dog, dad, mom, etc.) with different subjects based on a user input.

According to an embodiment, the electronic device 201 may identify a user input for selecting a specific subject among subjects (e.g., persons or animals) classified for a plurality of images stored in the memory 210 through the display 260 (e.g., the display 260 of FIG. 2). For example, the electronic device 201 may display information on names classified corresponding to a plurality of subjects through the display 260. According to an embodiment, when a first subject (e.g., daughter) is selected by a user input, the electronic device 201 may obtain a plurality of first images including the first subject among a plurality of images.

According to an embodiment, in operation 413, the electronic device 201 may obtain a plurality of second images related to a first content among a plurality of content stored in the memory 210. According to an embodiment, the electronic device 201 may obtain the plurality of second images based on identifying a user input for selecting the first content among a plurality of content stored in the memory 210 through the display 260. For example, the first content may include a picture, a movie, a game, a comic, or a music video. For example, the electronic device 201 may display identifiers (e.g., titles) of a plurality of content through the display 260 and identify a user input for selecting any one identifier (e.g., a title). For example, the plurality of second images related to the first content may include an image representing specific scenes of the first content and specific actions of subjects of the first content.

According to an embodiment, in operation 415, the electronic device 201 may obtain the first artificial intelligence model 330 (e.g., the first artificial intelligence model 330 of FIG. 3) by inputting the plurality of first images and the plurality of second images as training data into the artificial intelligence model 320 (e.g., the artificial intelligence model 320 of FIG. 3) stored in the memory 210.

According to an embodiment, the artificial intelligence model 320 may include a pre-trained reference model (a baseline model or a foundation model). According to an embodiment, the electronic device 201 may obtain the first artificial intelligence model 330 by fine-tuning the artificial intelligence model 320. According to an embodiment, the first artificial intelligence model 330 may include an artificial intelligence model for transforming the first subject to be related to the first content.

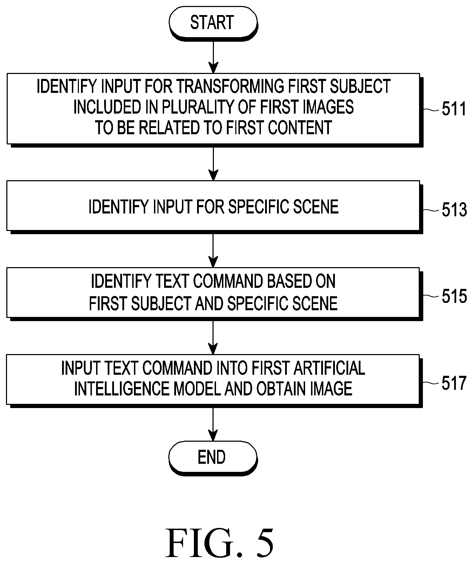

FIG. 5 is a flowchart illustrating an operation of an electronic device obtaining an image using a first artificial intelligence model according to an embodiment.

Referring to FIG. 5, according to an embodiment, in operation 511, the electronic device 201 (e.g., the electronic device 201 of FIG. 2) may identify an input for transforming a first subject included in a plurality of first images stored in the memory 210 (e.g., the memory 210 of FIG. 2) to be related to the first content. For example, transforming to be related to the first content may include transforming the first subject based on at least one of a composition, a background, a color, or a painting style of an image including a specific scene or a specific action included in the first content. According to an embodiment, the electronic device 201 may display a plurality of first indicators corresponding to a plurality of subjects and a plurality of second indicators corresponding to a plurality of content through the display 260 (e.g., the display 260 of FIG. 2). According to an embodiment, the plurality of content may include a picture, a game, a movie, a music video, and a comic.

According to an embodiment, the plurality of first indicators may include names (e.g., son, daughter, me, wife, our dog, dad, mom, etc.) classified corresponding to the plurality of subjects. According to an embodiment, the electronic device 201 may identify a user input for a first indicator (e.g., daughter) corresponding to the first subject among the plurality of first indicators.

According to an embodiment, the plurality of second indicators may include identifiers (e.g., titles) of the plurality of content. For example, the identifiers of the plurality of content may include an identifier of a picture, an identifier of a game, an identifier of a movie, an identifier of a music video, and an identifier of a comic. According to an embodiment, the electronic device 201 may identify a second input for a second indicator corresponding to the first content among the plurality of second indicators.

According to an embodiment, the electronic device 201 may identify an input for transforming the first subject to be related to the first content based on a user input for selecting a first indicator corresponding to the first subject and a second indicator corresponding to the first content.

According to an embodiment, in operation 513, the electronic device 201 may identify an input for a specific scene or a specific action.

For example, the electronic device 201 may display a plurality of indicators corresponding to a plurality of scenes or a plurality of actions through the display 260. According to an embodiment, when a user input for any one indicator among a plurality of indicators corresponding to a plurality of scenes or a plurality of actions is identified, the electronic device 201 may determine that an input for a specific scene or a specific action is identified.

For example, the electronic device 201 may identify a text input for a specific scene or a specific action. According to an embodiment, in operation 515, the electronic device 201 may obtain a text command based on the first subject and the specific scene. According to an embodiment, the text command may include a text command identifiable by the first artificial intelligence model 330 (e.g., the first artificial intelligence model 330 of FIG. 3).

According to an embodiment, the text command may include a name (e.g., daughter) classified corresponding to the first subject, an identifier (e.g., a title) of the first content, and an action or a scene of the first subject to be transformed. For example, the text command may include "generate a scene (e.g., an action or a scene of the first subject to be transformed) in which daughter (e.g., a name classified corresponding to the first subject) climbs an exterior wall of a building in movie A (e.g., an identifier of the first content)." For example, an image including a second subject in which the first subject is transformed may be obtained based on a painting style, a background, a composition, a color, or a subject of an image including a specific scene or a specific action of the first content. For example, a scene in which a subject climbs an exterior wall of a building may be a scene not included in the first content.

According to an embodiment, the text command may include a name classified corresponding to the first subject and an identifier (e.g., a title) of the first content. For example, the text command may include "transform the first subject using movie A." For example, the electronic device 201 may obtain an image including a transformed second subject by randomly determining an action or a scene of the first subject based on the first content using the first artificial intelligence model 330. For example, an image including a second subject in which the first subject is transformed may be obtained based on a painting style, a background, a composition, a color, or a subject of an image including a specific scene or a specific action of the first content.

According to an embodiment, in operation 517, the electronic device 201 may obtain an image in which the first subject is transformed to be related to the first content by inputting the text command into the first artificial intelligence model 330.

According to an embodiment, the electronic device 201 may transform the first subject to be related to the first content using at least one of at least one subject, a composition, a background, or a color included in a plurality of second images included in the first content. According to an embodiment, the image including the transformed first subject may include an image having a painting style identical to a painting style of at least one image included in the plurality of second images, or an animated image.

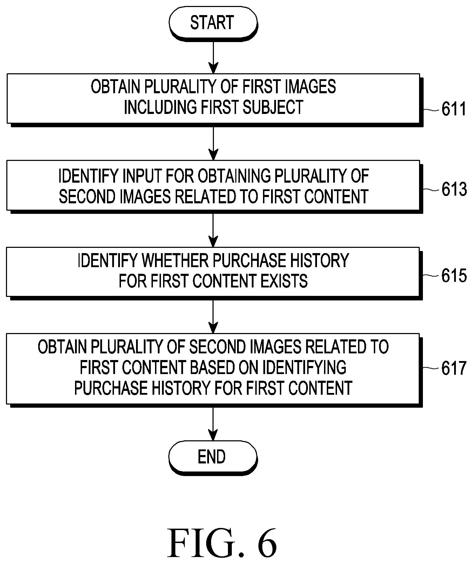

FIG. 6 is a flowchart illustrating an operation of an electronic device obtaining training data for a first artificial intelligence model based on a purchase history for content according to an embodiment.

Referring to FIG. 6, according to an embodiment, in operation 611, the electronic device 201 (e.g., the electronic device 201 of FIG. 2) may obtain a plurality of first images including a first subject stored in the memory 210 (e.g., the memory 210 of FIG. 2).

According to an embodiment, in operation 613, the electronic device 201 may identify an input for obtaining a plurality of second images related to the first content. According to an embodiment, the electronic device 201 may display a plurality of indicators corresponding to a plurality of content. According to an embodiment, the plurality of content may include a picture, a game, a movie, a music video, and a comic. According to an embodiment, the electronic device 201 may identify a user input for selecting an indicator corresponding to the first content among a plurality of indicators corresponding to the plurality of content. According to an embodiment, the electronic device 201 may identify an input for obtaining a plurality of second images related to the first content based on the user input for selecting an indicator corresponding to the first content.

According to an embodiment, in operation 615, the electronic device 201 may identify whether there is a purchase history for the first content in response to the input for obtaining a plurality of second images related to the first content. According to an embodiment, the electronic device 201 may identify whether the first content is content legitimately purchased by the electronic device 201.

According to an embodiment, in operation 617, the electronic device 201 may obtain a plurality of second images related to the first content as training data for the artificial intelligence model 320 (e.g., the artificial intelligence model 320 of FIG. 3) based on identifying the purchase history for the first content. According to an embodiment, when the electronic device 201 identifies that there is no purchase history for the first content, the electronic device 201 may not obtain a plurality of second images related to the first content as training data for the artificial intelligence model 320. For example, when the first content is identified as being obtained through an unverifiable path, the electronic device 201 may not use a plurality of second images related to the first content as training data for the artificial intelligence model 320. According to an embodiment, the electronic device 201 may not use a plurality of second images related to the first content as training data for the artificial intelligence model 320 based on identifying that there is no purchase history for the first content.

According to an embodiment, the electronic device 201 may obtain a plurality of first images including the first subject as training data for the artificial intelligence model 320.

Accordingly, according to an embodiment, the electronic device 201 may obtain an image that does not infringe the copyright of another person's copyrighted work.

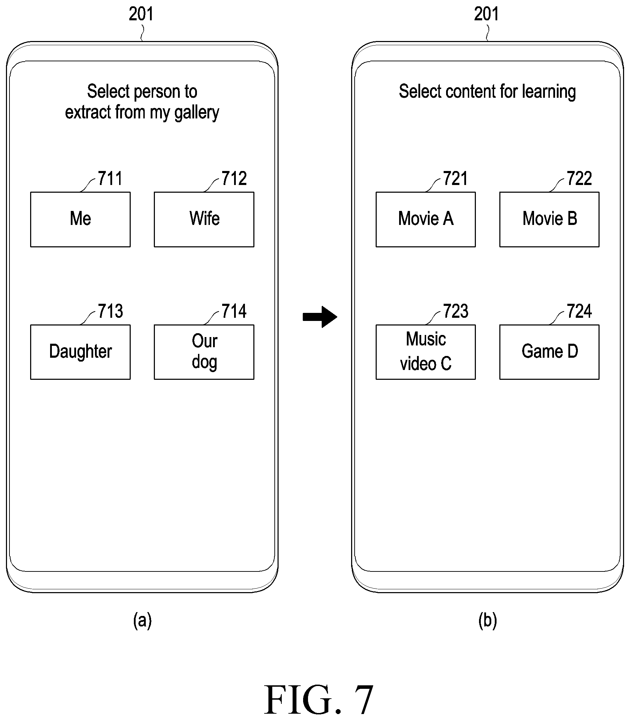

FIG. 7 is a view illustrating an operation of an electronic device obtaining a first artificial intelligence model for transforming a subject to be related to content according to an embodiment.

Referring to (a) of FIG. 7, according to an embodiment, the electronic device 201 (e.g., the electronic device 201 of FIG. 2) may classify a plurality of images including a plurality of subjects stored in the memory 210 (e.g., the memory 210 of FIG. 2) by image including an identical subject using an image clustering technology. According to an embodiment, the electronic device 201 may associate names designated by a user or the processor 220 with different subjects based on a user input. For example, the designated names may include daughter, me, wife, and our dog.

According to an embodiment, the electronic device 201 may display a plurality of first indicators 711, 712, 713, 714 corresponding to a plurality of subjects. According to an embodiment, the plurality of first indicators 711, 712, 713, 714 may include an indicator corresponding to different subjects. For example, the plurality of first indicators 711, 712, 713, 714 may display an indicator 711 representing me, an indicator 712 representing wife, an indicator 713 representing daughter, and an indicator 714 representing our dog. According to an embodiment, the plurality of first indicators 711, 712, 713, 714 may include names (e.g., me, wife, daughter, our dog) designated by a user input or the processor 220.

According to an embodiment, the electronic device 201 may identify a user input for the indicator 713 representing daughter among the plurality of first indicators 711, 712, 713, 714.

According to an embodiment, the electronic device 201 may obtain a plurality of first images including a first subject corresponding to daughter based on identifying a user input for the indicator 713 representing daughter.

Referring to (b) of FIG. 7, according to an embodiment, the electronic device 201 may display a plurality of second indicators 721, 722, 723, 724 corresponding to a plurality of content stored in the memory 210. For example, the plurality of second indicators 721, 722, 723, 724 may display an indicator 721 corresponding to first content (e.g., movie A), an indicator 722 corresponding to second content (e.g., movie B), an indicator 723 corresponding to third content (e.g., music video C), and an indicator 724 corresponding to fourth content (e.g., game D). For example, A and B may represent an identifier (e.g., a title) of a movie. For example, C may represent an identifier (e.g., a song title) of a song. For example, D may represent an identifier (e.g., a game title) of a game.

According to an embodiment, the electronic device 201 may identify a user input for an indicator 721 corresponding to the first content (e.g., movie A) among the plurality of second indicators 721, 722, 723, 724. According to an embodiment, the plurality of second indicators 721, 722, 723, 724 may include identifiers (e.g., a movie title, a music video title, a game title).

According to an embodiment, the electronic device 201 may obtain at least one image related to a specific scene or a specific action among a plurality of second images related to the first content based on identifying a user input for an indicator 721 corresponding to the first content (e.g., movie A).

According to an embodiment, the electronic device 201 may apply a visual effect to the plurality of second indicators 721, 722, 723, 724 so that the plurality of second indicators 721, 722, 723, 724 are visually distinguished from each other. According to an embodiment, the electronic device 201 may identify whether there is a purchase history for each of the plurality of content. According to an embodiment, the electronic device 201 may display, through the display 260, at least one first indicator corresponding to at least one first content having no purchase history among the plurality of second indicators 721, 722, 723, 724 to be visually distinguished from at least one second indicator corresponding to at least one second content having a purchase history among the plurality of second indicators 721, 722, 723, 724.

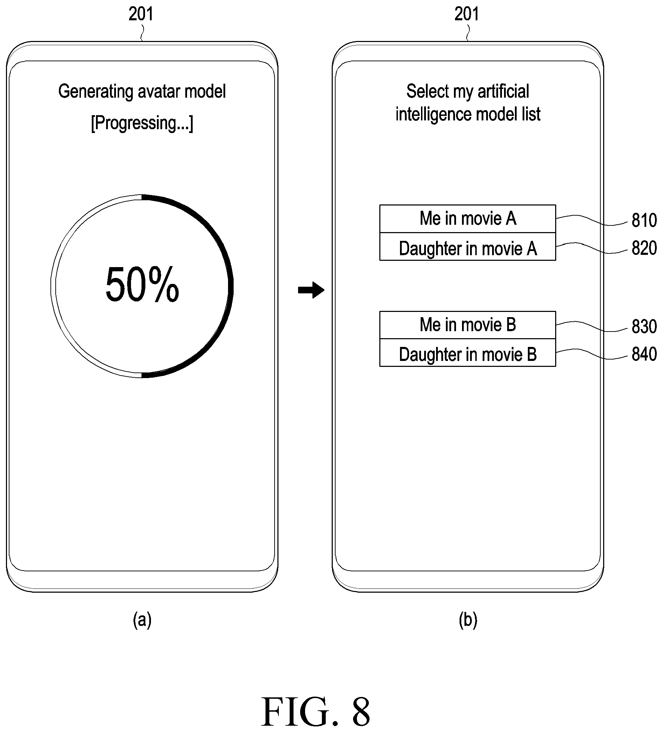

FIG. 8 is a view illustrating an operation of an electronic device obtaining artificial intelligence models for transforming a subject to be related to content according to an embodiment.

Referring to (a) of FIG. 8, according to an embodiment, the electronic device 201 (e.g., the electronic device 201 of FIG. 2) may input a plurality of first images including a subject corresponding to daughter and a plurality of second images related to the first content into the artificial intelligence model 320 (e.g., the artificial intelligence model 320 of FIG. 3) based on identifying a user input for the indicator 713 representing daughter (e.g., 713 of FIG. 7) and a user input for an indicator 721 corresponding to the first content (e.g., movie A).

According to an embodiment, the electronic device 201 may obtain the first artificial intelligence model 330 (e.g., the first artificial intelligence model 330 of FIG. 2) by fine-tuning the artificial intelligence model 320. The first artificial intelligence model 330 may represent an artificial intelligence model for transforming a subject corresponding to daughter to be related to the first content. According to an embodiment, the artificial intelligence model 320 may be stored in the memory 210.

According to an embodiment, the electronic device 201 may display information (e.g., generating avatar model) indicating that the artificial intelligence model 320 is being trained through the display 260 (e.g., the display 260 of FIG. 2).

According to an embodiment, the electronic device 201 may input a plurality of third images including a subject corresponding to me and a plurality of second images related to the first content into the artificial intelligence model 320 based on identifying a user input for the indicator 711 representing me (e.g., 711 of FIG. 7) and a user input for an indicator 721 corresponding to the first content (e.g., movie A).

According to an embodiment, the electronic device 201 may obtain a second artificial intelligence model 810 by fine-tuning the artificial intelligence model 320. The second artificial intelligence model 810 may represent an artificial intelligence model for transforming a subject corresponding to me to be related to the first content. According to an embodiment, the second artificial intelligence model 810 may be stored in the memory 210.

According to an embodiment, the electronic device 201 may input a plurality of third images including a subject corresponding to me and a plurality of fourth images related to the second content into the artificial intelligence model 320 based on identifying a user input for the indicator 711 representing me (e.g., 711 of FIG. 7) and a user input for an indicator 722 corresponding to the second content (e.g., movie B).

According to an embodiment, the electronic device 201 may obtain a third artificial intelligence model 830 by fine-tuning the artificial intelligence model 320. The third artificial intelligence model (not illustrated) may represent an artificial intelligence model for transforming a subject corresponding to me to be related to the second content. According to an embodiment, the third artificial intelligence model 830 may be stored in the memory 210.

According to an embodiment, the electronic device 201 may input a plurality of first images including a subject corresponding to daughter and a plurality of fourth images related to the second content into the artificial intelligence model 320 based on identifying a user input for the indicator 713 representing daughter (e.g., 713 of FIG. 7) and a user input for an indicator 722 corresponding to the second content (e.g., movie B).

According to an embodiment, the electronic device 201 may obtain a fourth artificial intelligence model 840 by fine-tuning the artificial intelligence model 320. The fourth artificial intelligence model 840 may represent an artificial intelligence model for transforming a subject corresponding to daughter to be related to the second content. According to an embodiment, the fourth artificial intelligence model 840 may be stored in the memory 210.

According to an embodiment, even when a user input for an indicator corresponding to content having no purchase history is identified, the electronic device 201 may not fine-tune the artificial intelligence model 320.

Referring to (b) of FIG. 8, according to an embodiment, the electronic device 201 may obtain a fine-tuned artificial intelligence model as a result of training the artificial intelligence model 320.

According to an embodiment, the electronic device 201 may obtain a first artificial intelligence model 820 (e.g., the first artificial intelligence model 330 of FIG. 3) obtaining an image in which a subject corresponding to daughter is transformed to be related to the first content (e.g., movie A).

According to an embodiment, the electronic device 201 may obtain a second artificial intelligence model 810 obtaining an image in which a subject corresponding to me is transformed to be related to the first content (e.g., movie A).

According to an embodiment, the electronic device 201 may obtain a third artificial intelligence model 830 obtaining an image in which a subject corresponding to me is transformed to be related to the second content (e.g., movie B) from the artificial intelligence model 320.

According to an embodiment, the electronic device 201 may obtain a fourth artificial intelligence model 840 obtaining an image in which a subject corresponding to daughter is transformed to be related to the second content (e.g., movie B).

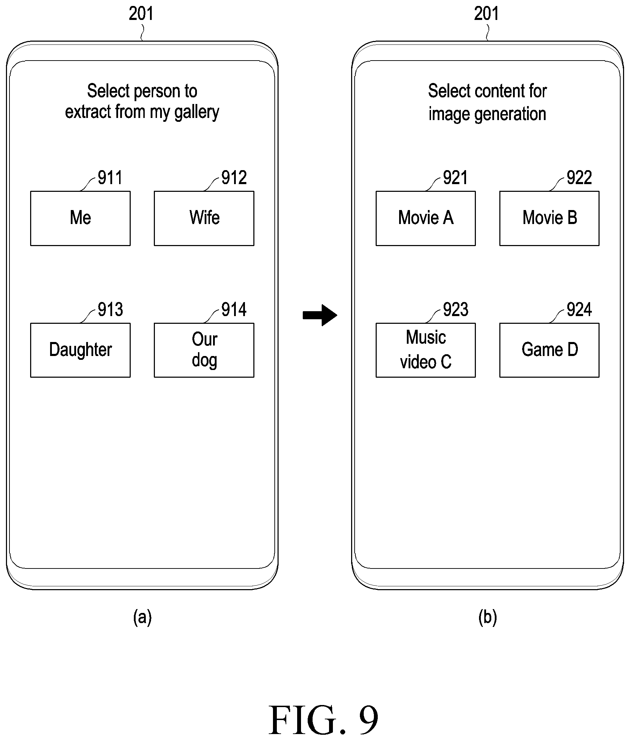

FIG. 9 is a view illustrating an operation of an electronic device identifying an input for generating a text prompt for transforming a subject to be related to content according to an embodiment.

Referring to (a) of FIG. 9, according to an embodiment, the electronic device 201 (e.g., the electronic device 201 of FIG. 2) may display a plurality of first indicators 911, 912, 913, 914 corresponding to a plurality of subjects. According to an embodiment, the plurality of first indicators 911, 912, 913, 914 may include an indicator corresponding to different subjects. For example, the plurality of first indicators 911, 912, 913, 914 may display an indicator 911 representing me, an indicator 912 representing wife, an indicator 913 representing daughter, and an indicator 914 representing our dog.

According to an embodiment, the electronic device 201 may identify a user input for the indicator 913 representing daughter among the plurality of first indicators 711, 712, 713, 714.

Referring to (b) of FIG. 9, according to an embodiment, the electronic device 201 may display a plurality of second indicators 921, 922, 923, 924 corresponding to a plurality of content for which the artificial intelligence model 320 is fine-tuned using images of a subject corresponding to daughter based on an input of the indicator 913 representing daughter. For example, the plurality of second indicators 921, 922, 923, 924 may display an indicator 921 corresponding to first content (e.g., movie A), an indicator 922 corresponding to second content (e.g., movie B), an indicator 923 corresponding to third content (e.g., music video C), and an indicator 924 corresponding to fourth content (e.g., game D). For example, A and B may represent an identifier (e.g., a title) of a movie. For example, C may represent an identifier (e.g., a song title) of a song. For example, D may represent an identifier (e.g., a game title) of a game.

According to an embodiment, the electronic device 201 may identify a user input for an indicator 921 corresponding to the first content (e.g., movie A).

According to an embodiment, the electronic device 201 may apply a visual effect to the plurality of second indicators 921, 922, 923, 924 so that the plurality of second indicators 921, 922, 923, 924 are visually distinguished from each other. According to an embodiment, the electronic device 201 may identify whether there is a purchase history for each of the plurality of content. According to an embodiment, the electronic device 201 may display, through the display 260, an indicator corresponding to content having no purchase history among the plurality of second indicators 921, 922, 923, 924 to be visually distinguished from an indicator corresponding to content having a purchase history among the plurality of second indicators 921, 922, 923, 924.

According to an embodiment, the electronic device 201 may identify the first artificial intelligence model 330 stored in the memory 210 based on a user input for the indicator 913 representing daughter and an indicator 921 corresponding to the first content (e.g., movie A).

For example, when a user input for the indicator 913 representing daughter and an indicator 922 corresponding to the second content (e.g., movie B) is identified, the electronic device 201 may identify the fourth artificial intelligence model 840 (e.g., the fourth artificial intelligence model 840 of FIG. 8) stored in the memory 210.

For example, when a user input for the indicator 913 representing me and an indicator 921 corresponding to the first content (e.g., movie A) is identified, the electronic device 201 may identify the second artificial intelligence model 810 (e.g., the second artificial intelligence model 810 of FIG. 8) stored in the memory 210.

For example, when a user input for the indicator 913 representing me and an indicator 922 corresponding to the second content (e.g., movie B) is identified, the electronic device 201 may identify the third artificial intelligence model 830 (e.g., the third artificial intelligence model 830 of FIG. 8) stored in the memory 210.

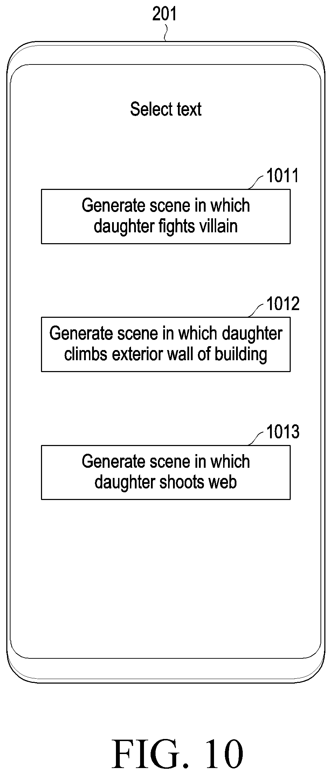

FIG. 10 is a view illustrating an operation of an electronic device obtaining a text command according to an embodiment.

Referring to FIG. 10, according to an embodiment, when a user input for the indicator 913 representing daughter (e.g., 913 of FIG. 9) and a user input for an indicator 921 representing the first content (e.g., movie A) (e.g., 921 of FIG. 9) are identified, the electronic device 201 (e.g., the electronic device 201 of FIG. 2) may identify the first artificial intelligence model 330 (e.g., the first artificial intelligence model 330 of FIG. 3) stored in the memory 210 (e.g., the memory 210 of FIG. 2).

According to an embodiment, the electronic device 201 may obtain a text command for transforming a subject corresponding to daughter to be related to the first content (e.g., movie A). For example, the text command may include a subject to be transformed and a specific scene or a specific action.

For example, a text command 1011 may include generating a scene in which daughter fights a villain. For example, a text command 1012 may include generating a scene in which daughter climbs an exterior wall of a building. For example, a text command 1013 may include generating a scene in which daughter shoots a web.

According to an embodiment, the electronic device 201 may display text commands 1011, 1012, 1013 through the display 260 (e.g., the display 260 of FIG. 2). According to an embodiment, the electronic device 201 may identify a user input for the text command 1012 among the text commands 1011, 1012, 1013.

According to the implementation, according to an embodiment, the electronic device 201 may obtain any one text command among the text commands 1011, 1012, 1013 randomly without displaying the text commands 1011, 1012, 1013 through the display 260.

According to an embodiment, the electronic device 201 may obtain a text input for a specific scene or a specific action by a user through the display 260.

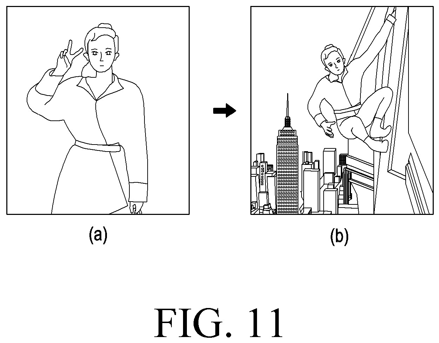

FIG. 11 is a view illustrating an image obtained using a first artificial intelligence model by an electronic device according to an embodiment.

Referring to (a) of FIG. 11, according to an embodiment, the electronic device 201 (e.g., the electronic device 201 of FIG. 2) may input the text command 1012 (e.g., 1012 of FIG. 10) into the first artificial intelligence model 330 (e.g., the first artificial intelligence model 330 of FIG. 3) stored in the memory 210 (e.g., the memory 210 of FIG. 2).

Referring to (b) of FIG. 11, according to an embodiment, the electronic device 201 may obtain a third image in which the first subject is transformed to be related to movie A using the first artificial intelligence model 330. According to an embodiment, the electronic device 201 may obtain a third image of a scene in which a subject corresponding to daughter climbs an exterior wall of a building.

According to an embodiment, the electronic device 201 may obtain a transformed subject by transforming the first subject to be identical to at least one of a painting style, a color, a composition, or a background of a subject (e.g., a subject of movie A) included in the second image.

According to an embodiment, an electronic device may include a display, memory, and a processor.

According to an embodiment, the electronic device may identify an input for transforming a first subject included in a plurality of first images stored in the memory to be related to a specific scene or a specific action of a first content stored in the memory.

According to an embodiment, in response to the input, the electronic device may obtain at least one image related to the specific scene or the specific action among a plurality of second images related to the first content.

According to an embodiment, the electronic device may obtain a text command for transforming the first subject to be related to the specific scene or the specific action.

According to an embodiment, the electronic device may obtain an image including a second subject in which the first subject is transformed to be related to the specific scene or the specific action by inputting the text command into a first artificial intelligence model stored in the memory.

According to an embodiment, the electronic device may obtain the plurality of first images including the first subject stored in the memory.

According to an embodiment, the electronic device may obtain the plurality of second images related to the first content stored in the memory.

According to an embodiment, the electronic device may obtain the first artificial intelligence model for transforming the first subject to be related to the specific scene or the specific action by inputting the plurality of first images and the plurality of second images as training data into an artificial intelligence model stored in the memory.

According to an embodiment, the electronic device may obtain the first artificial intelligence model by fine-tuning the artificial intelligence model.

According to an embodiment, the electronic device may transform the first subject to be related to the specific scene or the specific action using at least one of at least one subject, a composition, a background, or a color included in the at least one image.

According to an embodiment, the electronic device may display, through the display, a plurality of first indicators corresponding to the plurality of subjects and a plurality of second indicators corresponding to the plurality of content.

According to an embodiment, the electronic device may identify a first input for a first indicator corresponding to the first subject among the plurality of first indicators and a second input for a second indicator corresponding to the first content among the plurality of second indicators.

According to an embodiment, the electronic device may identify an input for transforming the first subject to be related to the specific scene or the specific action based on identifying the first input and the second input.

According to an embodiment, in response to the input, the electronic device may identify whether a purchase history for the first content is present.

According to an embodiment, the electronic device may obtain the at least one image based on identifying that the purchase history for the first content is present.

According to an embodiment, the electronic device may input the plurality of second images as training data into the artificial intelligence model based on identifying that the purchase history for the first content is present.

According to an embodiment, the electronic device may display, through the display, at least one first indicator corresponding to at least one first content having no purchase history among the plurality of second indicators to be visually distinguished from at least one second indicator corresponding to at least one second content having a purchase history among the plurality of second indicators.

According to an embodiment, the electronic device may obtain the image including a background identical to a background of the specific scene and including the second subject in which the first subject is transformed to take an action of a subject of the first content included in the specific scene.

According to an embodiment, when the first content is an animation, the electronic device may transform the first subject into the second subject based on a character of the animation.

According to an embodiment, a method of operating an electronic device may include an operation of identifying an input for transforming a first subject included in a plurality of first images stored in the memory of the electronic device to be related to a specific scene or a specific action of a first content stored in the memory.

According to an embodiment, the method of operating the electronic device may include an operation of obtaining at least one image related to the specific scene or the specific action among a plurality of second images related to the first content in response to the input.

According to an embodiment, the method of operating the electronic device may include an operation of obtaining a text command for transforming the first subject to be related to the specific scene or the specific action.

According to an embodiment, the method of operating the electronic device may include an operation of obtaining an image including a second subject in which the first subject is transformed to be related to the specific scene or the specific action by inputting the text command into a first artificial intelligence model stored in the memory.

According to an embodiment, the method of operating the electronic device may include an operation of obtaining the plurality of first images including the first subject stored in the memory.

According to an embodiment, the method of operating the electronic device may include an operation of obtaining the plurality of second images related to the first content stored in the memory.

According to an embodiment, the method of operating the electronic device may include an operation of obtaining the first artificial intelligence model for transforming the first subject to be related to the first content by inputting the plurality of first images and the plurality of second images as training data into an artificial intelligence model stored in the memory.

According to an embodiment, the method of operating the electronic device may include an operation of obtaining the first artificial intelligence model by fine-tuning the artificial intelligence model.

According to an embodiment, the method of operating the electronic device may include an operation of transforming the first subject to be related to the specific scene or the specific action using at least one of at least one subject, a composition, a background, or a color included in the at least one image.

According to an embodiment, the method of operating the electronic device may include an operation of displaying, through a display included in the electronic device, a plurality of first indicators corresponding to the plurality of subjects and a plurality of second indicators corresponding to the plurality of content.

According to an embodiment, the method of operating the electronic device may include an operation of identifying a first input for a first indicator corresponding to the first subject among the plurality of first indicators and a second input for a second indicator corresponding to the first content among the plurality of second indicators.

According to an embodiment, the method of operating the electronic device may include an operation of identifying an input for transforming the first subject to be related to the specific scene or the specific action based on identifying the first input and the second input.

According to an embodiment, the method of operating the electronic device may include an operation of identifying whether a purchase history for the first content is present in response to the input.

According to an embodiment, the method of operating the electronic device may include an operation of obtaining the at least one image based on identifying that the purchase history for the first content is present.

According to an embodiment, the method of operating the electronic device may include an operation of inputting the plurality of second images as training data into the artificial intelligence model based on identifying that the purchase history for the first content is present.

According to an embodiment, the method of operating the electronic device may include an operation of displaying, through the display, at least one first indicator corresponding to at least one first content having no purchase history among the plurality of second indicators to be visually distinguished from at least one second indicator corresponding to at least one second content having a purchase history among the plurality of second indicators.

According to an embodiment, the method of operating the electronic device may include an operation of obtaining the image including a background identical to a background of the specific scene and including the first transformed subject in which the first subject is transformed to take an action of a subject included in the specific scene.

According to an embodiment, when the first content is an animation, the method of operating the electronic device may include an operation of transforming the first subject into the second subject based on a character of the animation.

According to an embodiment, a non-transitory recording medium may store an instruction capable of executing an operation of identifying an input for transforming a first subject included in a plurality of first images stored in the memory of an electronic device to be related to a specific scene or a specific action of a first content stored in the memory.

According to an embodiment, the non-transitory recording medium may store an instruction capable of executing an operation of obtaining at least one image related to the specific scene or the specific action among a plurality of second images related to the first content in response to the input.

According to an embodiment, the non-transitory recording medium may store an instruction capable of executing an operation of obtaining a text command for transforming the first subject to be related to the specific scene or the specific action.

According to an embodiment, the non-transitory recording medium may store an instruction capable of executing an operation of obtaining an image including a second subject in which the first subject is transformed to be related to the specific scene or the specific action by inputting the text command into a first artificial intelligence model stored in the memory.

According to an embodiment, the non-transitory recording medium may store an instruction capable of executing an operation of obtaining the plurality of first images including the first subject stored in the memory.

According to an embodiment, the non-transitory recording medium may store an instruction capable of executing an operation of obtaining the plurality of second images related to the first content stored in the memory.

According to an embodiment, the non-transitory recording medium may store an instruction capable of executing an operation of obtaining the first artificial intelligence model for transforming the first subject to be related to the first content by inputting the plurality of first images and the plurality of second images as training data into an artificial intelligence model stored in the memory.

According to an embodiment, the non-transitory recording medium may store an instruction capable of executing an operation of obtaining the first artificial intelligence model by fine-tuning the artificial intelligence model.

According to an embodiment, the non-transitory recording medium may store an instruction capable of executing an operation of transforming the first subject to be related to the specific scene or the specific action using at least one of at least one subject, a composition, a background, or a color included in the at least one image.

According to an embodiment, the non-transitory recording medium may store an instruction capable of executing an operation of displaying, through a display included in the electronic device, a plurality of first indicators corresponding to the plurality of subjects and a plurality of second indicators corresponding to the plurality of content.

According to an embodiment, the non-transitory recording medium may store an instruction capable of executing an operation of identifying a first input for a first indicator corresponding to the first subject among the plurality of first indicators and a second input for a second indicator corresponding to the first content among the plurality of second indicators.

According to an embodiment, the non-transitory recording medium may store an instruction capable of executing an operation of identifying an input for transforming the first subject to be related to the specific scene or the specific action based on identifying the first input and the second input.

According to an embodiment, the non-transitory recording medium may store an instruction capable of executing an operation of identifying whether a purchase history for the first content is present in response to the input.

According to an embodiment, the non-transitory recording medium may store an instruction capable of executing an operation of obtaining the at least one image based on identifying that the purchase history for the first content is present.

According to an embodiment, the non-transitory recording medium may store an instruction capable of executing an operation of inputting the plurality of second images as training data into the artificial intelligence model based on identifying that the purchase history for the first content is present.

According to an embodiment, the non-transitory recording medium may store an instruction capable of executing an operation of obtaining the image including a background identical to a background of the specific scene and including the first transformed subject in which the first subject is transformed to take an action of a subject included in the specific scene.

According to an embodiment, when the first content is an animation, the non-transitory recording medium may store an instruction capable of executing an operation of transforming the first subject into the second subject based on a character of the animation.

According to an embodiment, the non-transitory recording medium may store an instruction capable of executing an operation of displaying, through the display, at least one first indicator corresponding to at least one first content having no purchase history among the plurality of second indicators to be visually distinguished from at least one second indicator corresponding to at least one second content having a purchase history among the plurality of second indicators.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 201). For example, a processor (e.g., the processor 120 or 220) of the machine (e.g., the electronic device 101 or 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201) comprising:
a display (260);
memory (210) storing instructions; and
a processor (220),
wherein the instructions, when executed by the processor, cause the electronic device to:
identify an input for transforming a first subject included in a plurality of first images stored in the memory to be related to a specific scene or a specific action of a first content stored in the memory,
in response to the input, obtain at least one image related to the specific scene or the specific action among a plurality of second images related to the first content,
obtain a text command for transforming the first subject to be related to the specific scene or the specific action, and
obtain an image including a second subject in which the first subject is transformed to be related to the specific scene or the specific action by inputting the text command into a first artificial intelligence model (330) stored in the memory.

2. The electronic device of claim 1, wherein the instructions, when executed by the processor, cause the electronic device to:
obtain the plurality of first images including the first subject stored in the memory,
obtain the plurality of second images related to the first content stored in the memory, and
obtain the first artificial intelligence model for transforming the first subject to be related to the specific scene or the specific action by inputting the plurality of first images and the plurality of second images as training data into an artificial intelligence model (320) stored in the memory.

3. The electronic device of any one of claims 1 to 2, wherein the instructions, when executed by the processor, cause the electronic device to:
obtain the first artificial intelligence model by fine-tuning the artificial intelligence model.

4. The electronic device of any one of claims 1 to 3, wherein the instructions, when executed by the processor, cause the electronic device to:
transform the first subject to be related to the specific scene or the specific action using at least one of at least one subject, composition, background, or color included in the at least one image.

5. The electronic device of any one of claims 1 to 4, wherein the instructions, when executed by the processor, cause the electronic device to:
display, through the display, a plurality of first indicators corresponding to the plurality of subjects, and a plurality of second indicators corresponding to the plurality of content,
identify a first input for a first indicator corresponding to the first subject among the plurality of first indicators, and a second input for a second indicator corresponding to the first content among the plurality of second indicators, and
based on identifying the first input and the second input, identify an input for transforming the first subject to be related to the specific scene or the specific action.

6. The electronic device of any one of claims 1 to 5, wherein the instructions, when executed by the processor, cause the electronic device to:
in response to the input, identify whether a purchase history for the first content exists, and
based on identifying that the purchase history for the first content exists, obtain the at least one image.

7. The electronic device of any one of claims 1 to 6, wherein the instructions, when executed by the processor, cause the electronic device to:
based on identifying that the purchase history for the first content exists, input the plurality of second images as training data into the artificial intelligence model.

8. The electronic device of any one of claims 1 to 7, wherein the instructions, when executed by the processor, cause the electronic device to:
obtain the image including a background identical to a background of the specific scene and including the second subject in which the first subject is transformed to take an action of a subject of the first content included in the specific scene.

9. The electronic device of any one of claims 1 to 8, wherein the instructions, when executed by the processor, cause the electronic device to:
when the first content is an animation, transform the first subject into the second subject based on a character of the animation.

10. The electronic device of any one of claims 1 to 9, wherein the instructions, when executed by the processor, cause the electronic device to:
display, through the display, at least one first indicator corresponding to at least one first content having no purchase history among the plurality of second indicators to be visually distinguished from at least one second indicator corresponding to at least one second content having a purchase history among the plurality of second indicators.

11. A method of operating an electronic device (201), the method comprising:
identifying an input for transforming a first subject included in a plurality of first images stored in memory (210) of the electronic device to be related to a specific scene or a specific action of a first content stored in the memory;
in response to the input, obtaining at least one image related to the specific scene or the specific action among a plurality of second images related to the first content;
obtaining a text command for transforming the first subject to be related to the specific scene or the specific action; and
obtaining an image including a second subject in which the first subject is transformed to be related to the specific scene or the specific action by inputting the text command into a first artificial intelligence model (330) stored in the memory.

12. The method of claim 11, further comprising:
obtaining the plurality of first images including the first subject stored in the memory;
obtaining the plurality of second images related to the first content stored in the memory; and
obtaining the first artificial intelligence model for transforming the first subject to be related to the first content by inputting the plurality of first images and the plurality of second images as training data into an artificial intelligence model (320) stored in the memory.

13. The method of any one of claims 11 to 12, further comprising at least one operation of the electronic device of any one of claims 3 to 10.
